# EUROPÄISCHE PATENTSCHRIFT

(11) **EP 0 321 531 B1**
(45) Veröffentlichungstag und Bekanntmachung des Hinweises auf die Patenterteilung: **19.05.1993**
(21) Anmeldenummer: 88905774.1
(22) Anmeldetag: 24.06.1988
(51) Int. Cl.: B65G 53/66

(54) **LUFTREGULIEREINHEIT, VERFAHREN ZUR LUFTSTRÖMUNGSREGELUNG UND VERWENDUNG EINES AUFTRIEBSKÖRPERS IN EINEM SOLCHEN SYSTEM**
AIR-REGULATING UNIT, PROCESS FOR REGULATING AIR FLOW AND USE OF A BUOYANT BODY IN SUCH A SYSTEM
UNITE DE REGLAGE DE L'AIR, PROCEDE DE REGLAGE DE L'ECOULEMENT DE L'AIR ET UTILISATION D'UN FLOTTEUR DANS UN TEL SYSTEME

(30) Priorität: 01.07.1987 CH 2478/87
(43) Veröffentlichungstag der Anmeldung: 28.06.1989
(73) Patentinhaber: BUEHLER AG, 9240 Uzwil (CH)
(72) Erfinder: HOFSTETTER, Hans, CH-9202 Gossau (CH)
(74) Vertreter: von Samson-Himmelstjerna, Friedrich R., Dipl.-Phys.
(86) Internationale Anmeldenummer: EP8800559
(87) Internationale Veröffentlichungsnummer: WO8900141

(56) Entgegenhaltungen:
- DE-C- 375 147
- DE-C- 456 336
- DE-C- 853 877
- DE-C- 909 430
- FR-A- 1 375 447

## Beschreibung

Die Erfindung betrifft eine Luftreguliereinheit zur selbsttätigen Luftströmungsregelung in einem einer Ventilator oder ein Gebläse sowie eine oder mehrere Förderleitungen aufweisenden pneumatischen Fördersystem, die einen bewegbar gelagerten Drosselkörper aufweist, an dem eine in Richtung seiner offenen Position wirksame Gegenkraft selbsttätig angreift. Die Erfindung betrifft auch ein Verfahren zur zur selbsttätigen Regelung der Luftströmung in einer Gruppe von pneumatischen Fördersträngen, die über ein Verbindungsrohr an einem gemeinsamen Ventilator bzw. einem Gebläse angeschlossen wird. Außerdem betrifft die Erfindung die Verwendung einer Luftreguliereinheit.

Je höher der Automatisierungsgrad einer industriellen Anlage angestrebt wird, umso gewichtiger ist die Forderung der Betriebssicherheit der einzelnen Anlageelemente. Dies ist nicht nur eine generalle Erfahrung der jüngsten industriellen Entwicklung, sondern bereitsfester Teil in dem Pflichtenheft des Anlagebauers. Zumindest theoretisch kann auf zwei Wegen die Betriebssicherheit vergrößert werden. Der eine ist die vermehrte Anwendung von Computerintelligenz nicht nur in einer zentralen Steuerung, sondern besonders auch als Vorortintelligenz bei den einzelnen Maschinen und Geräten.

Ein Lösungsansatz für die Beherrschung des der Erfindung zugrunde liegenden Problemkreises ist in der DE-C-3 128 807 beschrieben. Das Grundproblem ist im Zusammenhang mit der Mühlenpneumatik schon sehr lange bekannt. Mehrere parallele Förderrohre werden hier an einem gemeinsamen Ventilator oder Gebläse angeschlossen. Dadurch stehen die Luftmengen der einzelnen Förderrohre in gegenseitiger Abhängigkeit. Sobald sich z. B. bei einem einzelnen Förderrohr, oder bei einem Teil der Förderrohre die Fördergutmenge verringert, vergrößert sich in diesen Rohren, als Folge des fehlenden Förderleitungswiderstandes die Luftmenge. Dies ist aber nachteilig für die übrigen Förderrohre, da sich in den letzteren die Luftmenge und somit die Luftgeschwindigkeit reduziert. Die Produktförderung wird in den belasteten Förderrohren instabil und bei schlechter oder spitzer Auslegung des Luftsystemes kann dies sogar Produktstauungen und Verstopfungen verursachen. Die DE-C-3 128 807 strebt einen sicheren Betrieb an, ohne daß der Ventilator für das Fördersystem für eine Überkapazität ausgelegt zu sein braucht. Dazu wird vorgeschlagen, für jedes Förderrohr eine Vorrichtung zur Luftstromregelung, eine Detektoranordnung zum Erfassen des Luftdurchflusses und ein von der Detektoranordnung gesteuertes Stellglied für die jeweilige Vorrichtung zur Luftstromregelung vorzusehen, um den Luftdurchfluß durch die Förderrohre konstant zu halten. Über die Detektoranordnung wird der statische Druck oder ein Differenzdruck in dem jeweiligen Förderrohr festgestellt, dieser in einer elektronischen Steuerung verarbeitet, und zwar zur Bildung von Steuersignalen an die jeweiligen Stellglieder für die Vorrichtungen zur Luftstromregelung, um die Luftmenge in jedem Förderstrang auf ein zulässiges Minimum zu halten.

Die meßtechnische Verwendung des statischen Luftdruckes in einer Förderleitung mit staubhaltigen Gütern ist jedoch problematisch. Es gibt eine ganze Anzahl Faktoren, die direkte Abhängigkeit "statischer Luftdruck" - "Luftmenge" stören. Einer der Hauptfehlerfaktoren ist die jeweilige spezifische bauliche Auslegung der Strömungsquerschnitte - Formen - Oberflächen, usw. Ferner werden die Druckwerte stark von allfällig anhaftendem Staub verfälscht, bis hin zur Unbrauchbarkeit der Meßwerte. Wird der statische Druck über herkömmliche Druckmeßgeräte festgestellt, so sind die entsprechenden Signale in staubhaltiger Luft nach kurzer Zeit wegen Verstopfen der geringen Meßrohrquerschnitte ebenfalls nicht mehr aussagekräftig.

Damit aber erweist sich der Wunsch der exakten Regelung und Steuerung der Luftmenge mit elektronischen Rechnermitteln als eine Illusion. Die Elektronik führt hier zur Komplizierung und Komplexierung der an sich einfachen Sachverhalte. Das Ziel, die Erhöhung der Betriebssicherheit, wird nicht erreicht.

Als zweiter Lösungsversuch wird in neuer Zeit bei vielen Automatisierungsvorrichtungen das Problem einfach dadurch umgangen, daß z. B. jeder Förderleitung ein eigenes Gebläse zugeordnet wird. Denkbar wäre es, ganz einfach Drosselklappen für eine Grobregelung jedes Förderstranges zu verwenden. Wegen der sehr großen Zahl einzelner pneumatischer Förderstränge in einer Mühle kommt eine solche Lösung aus Kostengründen nicht in Frage. Abgesehen davon, stellt die Verwendung von einer Vielzahl Ventilatoren, Motoren, usw. infolge der dadurch bedingten starken Erhöhung der Zahl der Einzelelemente des Systems die Betriebssicherheit wiederum in Frage.

Weder ein Mehr an Vorortintelligenz noch eine Beseitigung eines für viele pneumatische Förderleitungen gemeinsamen Sammelsystems hat bis heute für die Praxis ein befriedigendes Resultat gebracht. Nur in untergeordneten Fällen kann noch das älteste und einfachste Konzept einer in jeder Förderleitung beweglich angeordneten Regelklappe angewendet werden. Dabei wird die Regelklappe durch ein Gegengewicht in eine geöffnete, und je nach Stärke der Luftströmung in eine mehr oder weniger geschlossene Position bewegt. Dies im Unterschied zu der Verschlußklappe für Ventilationsanlagen, die ohne Luftströmung schließen und durch die Luftströmung sich in eine offene Position bewegen.

Eine etwas verbesserte Konstruktion für die Regelung der Luftmenge in Lüftungsanlagen, ist in der CH-A-600 428 beschrieben. Bei diesem Lösungsvorschlag werden die dynamischen Luftkräfte, welche auf die ebenen Flächen einer Drosselklappe wirken, sowie ein Verspannungs-Drehmoment sowie ein der Soll-Größe des Luftstromes entsprechendes Korrektursignal für die jeweils gewünschte Gleichgewichts- bzw. Öffnungslage der Drosselklappe verwendet. Die Frage der Staubempfindlichkeit ist auch hier nicht gelöst.

Aus der DE-C-853 877 ist eine Vorrichtung zum selbsttätigen Regeln der Förderleistung bei pneumatischen Förderanlagen bekannt, bei der ein Meßgerät eine auf den statischen Druck des Fördermittels ansprechende Vorrichtung schaltet, die ihrerseits ein in die Förderrohrleitung eingeschaltetes Regelglied steuert.

Aus der FR-A-13 75 447 ist eine Einrichtung zur Luftstromregelung bei pneumatischen Leitungen bekannt. Ein Zylinder ist dabei innerhalb eines starren Zylinders entsprechend größeren Durchmessers bewegbar. Die Bewegung des Innenzylinders kann zum teilweisen bis vollständigen Verschluß von Strömungsmittelöffnungen führen. Ein mit dem beweglichen Innenzylinder über eine Stange verbundener Körper unterschiedlichster Form dient als Meßeinrichtung, wobei je nach Druckbeaufschlagung durch das Strömungsmittel die Lage dieses Körpers verändert wird. Diese Veränderung der Lage bewirkt schließlich eine Änderung der Lage des als Drosselkörper wirkenden beweglichen Innenzylinders relativ zum Außenzylinder und damit einen Verschluß der Strömungsmittelöffnungen des Außenzylinders, d. h. insgesamt eine Drosselung der Strömung.

Der Erfindung liegt nun die Aufgabe zugrunde, die Nachteile der bisherigen Lösungen zu verringern und insbesondere die Betriebssicherheit zu erhöhen.

Zur Lösung dieser Aufgabe ist die gattungsgemäße Luftregulierungseinheit mit einem Drosselkörper als drehbeweglich gelagerter Auftriebskörper nach Art eines Tragflügelprofiles, insbesondere mit einer stark gerundeten Anströmseite und einem spitz zulaufenden Abströmende, ausgebildet, derart, daß die an ihm angreifenden Auftriebskräfte in Richtung seiner Schließposition wirken. Bei einem gattungsgemäßen Verfahren wird diese Aufgabe dadurch gelöst, daß zumindest bei Fördersträngen mit größeren Leitungsquerschnitten zur Luftströmungsrelelung eine Luftreguliereinheit nach einem der Ansprüche 1-5 verwendet wird, deren Drosselkörper durch das Wechselspiel zwischen im Sinne einer Schließkraft an ihm angreifenden dynamischen Strömungskräften und einer im Sinne einer Öffnungskraft angreifenden Gegenkraft betätigt wird. Schließlich wird diese Aufgabe auch durch die Verwendung einer erfindungsgemäßen Luftreguliereinheit für die Regelung der Luftströmung in einem pneumatischen Fördersystem bzw. einem Luftentstaubungssystem gelöst, wobei am Drosselkörper eine in Richtung seiner offenen Position wirksame Gegenkraft selbsttätig angreift und der Körper derart ausgebildet ist, daß die an ihm angreifenden Auftriebskräfte in Richtung seiner Schließposition wirken.

Größer angelegte Laborversuche haben eine überraschend präzise Funktion bei geringstmöglichem Luftverbrauch für eine pneumatische Förderung der ausgesprochen einfachen Vorrichtung, insbesondere, aber ohne Verwendung komplizierter und staubempfindlicher Bauelemente ergeben.

Dies wurde von dritten beteiligten Störungsfachleuten nicht für möglich gehalten, zumal nun doch schon seit dem Beginn der pneumatischen Passagenförderung in den Mühlen, also etwa seit 40 Jahren, vergeblich nach Lösungen gesucht worden ist.

Durch geeignete Wahl des Profiles des Auftriebskörpers kann nicht nur eine Konstanthaltung der Luftmenge, sondern sogar ein positiver Effekt insofern erreicht werden, als z. B. bei zunehmendem Widerstand in einzelnen Förderleitungen sich bei zunehmendem Widerstand in einzelnen Förderleitungen sich eine etwas vergrößerte Luftmenge einstellt, dies als weiterer Vorteil in Bezug auf die Stabilität der pneumatischen Förderung.

Die Erfindung erlaubt auch verschiedene weitere bevorzugte Ausgestaltungsgedanken. So kann der Auftriebskörper in der Art eines Tragflügelprofiles ausgebildet werden, mit einer stark gerundeteten Anströmseite und einem spitz zulaufenden Abströmende. Diese Maßnahme erlaubt ganz besonders, ein positives Luftdruck-Luftmengenverhältnis aufrecht zu erhalten, indem z. B. bei einer Tendenz zum Zusammenbrechen der pneumatischen Förderung die Luftmenge sofort erhöht wird.

Bevorzugt ist das Tragflügelprofil auf der einen Seite gewölbt, auf der gegenüberliegenden Seite im wesentlichen flach ausgebildet.

Eine weitere bevorzugte Ausgestaltung ist darin zu sehen, daß der Auftriebskörper auf der Abströmseite einen Einschnitt aufweist. Damit kann sowohl in der ganz offenen wie in der ganz geschlossenen Stellung eine Vergrößerung der Ansprechempfindlichkeit gewonnen werden, da auf diese Weise ein geringes Ungleichgewicht der Kräfte bezüglich des Drehpunktes des Auftriebskörpers erhalten wird, auch wenn der Drehpunkt etwa in der Mitte des Auftriebskörpers angeordnet ist.

Damit die Reguliereinheit genau eingestellt werden kann, besonders aber auch, damit bei späteren Änderungen Korrekturen vorgenommen werden können, sind bevorzugt die mechanischen Öffnungskräfte einstellbar und durch eine Federkraft oder ein beispielsweise im Auftriebskörper vorhandenes oder an dessen Drehachse angreifendes Gegengewicht gebildet. Besonders für extreme Schließstellung ist es vorteilhaft, wenn der Auftriebskörper in der geschlossenen Stellung auf der An- und Abströmseite einen Luftspalt freiläßt.

Um über einen großen Bereich die Luftmenge genau regeln zu können, empfiehlt es sich, in der Luftförderleitung eine verengte Stelle vorzusehen, wobei der Auftriebskörper im Bereich der verengten Stelle angeordnet ist.

Vorzugsweise weist der Auftriebskörper in der ganz offenen Stellung einen Anstellwinkel von etwa 20 Winkelgraden auf und bewegt sich für die Regelung in dem Bereich von 20° und 90°. Bei 90° wirkt der Auftriebskörper nahezu wie eine geschlossene Klappe, ist also in einer völligen Querlage zur Luftströmung. Verschiedene Tests haben gezeigt, daß die offene Stellung durch einen Anschlag begrenzt werden soll. Für einfache Anwendungen kann der Anschlag für die offene Stellung auf etwa 10° angesetzt werden, bevorzugt weist er einen Wert von etwa 15° bis 25° auf. Für die meisten Fälle wurde jedoch ein Wert von 20° als optimal gefunden. Bei 20° entstehen bereits sehr starke Auftriebskräfte, so daß sofort eine hohe Ansprechempfindlichkeit entsteht, was besonders beim Anfahren der Anlage, also beim Aufstarten der Ventilation, entscheidend sein kann.

Jedem Fachmann auf dem Gebiet der technischen Beherrschung der Luftströmung ist es zur Genüge bekannt, daß oft durch kleinste Änderungen, z. B. von einer Luftmeßstrecke durch die Entstehung von örtlichen, nicht kontrollierbaren Turbulenzen, das Resultat so stark verfälscht wird, daß es unbrauchbar wird, also Abweichungen hervorgerufen werden, die ohne weiteres 20, 50 und mehr % von dem tatsächlichen Wert betragen können. Es braucht sehr viel Übung und besonders die Anwendung der bekannten meßtechnischen Regeln, um erfolgreich messen zu können. Beim Prandtl-Rohr genügen schon leichte Schrägstellung des Staurohres und man erhält Meßfehler über der zulässigen Toleranz. Andererseits weiß der Praktiker doch einige Kniffe, um ans Ziel zu kommen.

Noch problematischer liegen die Verhältnisse etwa im Flugzeugbau, etwa bei der Auslegung der Tragflügelprofile, der klassischen Anwendung der Auftriebskörper. Das Tragflügelprofil hat einen bestimmten Bereich für den Anstellwinkel, um optimale Verhältnisse für die Auftriebskräfte zu erhalten. Wird der Anstellwinkel nun zu groß gewählt, reißt die Strömung auf der Abströmseite abrupt ab und geht auch hier in eine völlig unkontrollierbare Turbulenz über, und die Auftriebskräfte fallen zusammen. Im normalen Unterschallbereich rechnet man mit Anstellwinkeln von maximal bis zu 20°. Überträgt man nun diese bekannten Gesetzmäßigkeiten, so erkennt man sofort die Unmöglichkeit eben dieser Übertragung. Wenn der Auftriebskörper in der Funktion einer Drosselklappe verwendet wird, so müßte auch hier zumindest in der ersten Überlegung nur ein kleiner, zur Luftdrosselung aber nahezu unnützer Verstellbereich zulässig sein. Wie oben bei der Vorrichtung bereits ausgeführt, haben Messungen mit der neuen Luftmengenregelung aber gerade das Gegenteil, nämlich einen ausgeprägt stabilen "LuftmengeDruckverlauf" bis nahe an den Schließpunkt der fast völligen Querstellung des Auftriebskörpers ergeben. Dies bedeutet für den Auftriebskörper einen Einsatz gerade in dem Bereich, der außerhalb dem Anwendungsbereich der Flugprofile liegt.

Eine für die Praxis ausreichende Erklärung könnte darin liegen, daß ein Auftriebskörper in einem geschlossenen Rohrsystem sich völlig anders verhält als das gleiche Profil in vergleichbaren Geschwindigkeitsverhältnissen an einem Flugzeug in freier Atmosphäre. Dem Anmelder ist es nicht bekannt, daß dieses Phänomen durchgehend erforscht bzw. je in die Praxis für die Luftmengenregelung eingesetzt worden ist.

Die Erfindung umfaßt bevorzugt die Verwendung eines drehbeweglich gelagerten Auftriebskörpers in Form eines Tragflügelprofiles als Drosselklappe im Bereich einer verengten Stelle der Luftleitung.

In der Folge wird nun die Erfindung anhand einiger Ausführungsbeispiele erläutert. Dabei zeigen
- die Figur 1: einen Schnitt durch eine Luftmengenregeleinrichtung in offener Stellung,
- die Figur 2: die Luftmengenregeleinrichtung der Fig. 1 in halb geschlossener Stellung,
- die Figur 3: das Regelverhalten (Druck/Luftmenge) eines Profiles gemäß Fig. 1 und 2.
- Die Figur 4: zeigt eine einfache Anordnung für die neue Luftmengenregelung.
- Die Figur 5: zeigt schematisch die Regelung einer ganzen Mühlenpneumatik.

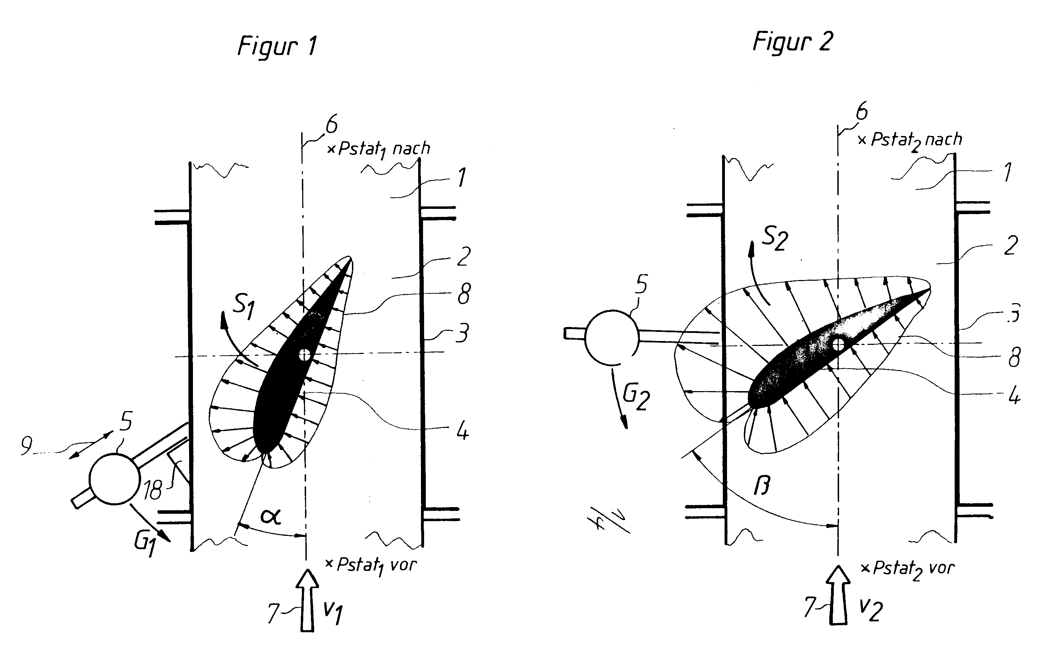

In Figur 1 ist in einer Luftleitung eine Luftreguliereinheit 2 eingebaut, welche aus einem Rohrstück 3, einem um eine Drehachse 15 schwenkbar gelagerten Auftriebskörper 4 sowie einem Gegengewicht 5 besteht. Das Rohrstück 3 kann entweder als normales Rohr mit kreisförmigem oder z. B. mit rechteckigem Querschnitt ausgebildet sein. Der Auftriebskörper 4 weist in der völlig offenen Lage einen Winkel α von wenigstens 10 Winkelgraden zu der Mittelachse 6 des Rohrstückes 3 auf, derart, daß durch die Luftströmung, Pfeil 7, in jedem Fall eine als Schließkraft S wirkende Auftriebskraft entsteht.
Die offene Lage des Auftriebskörpers 4 wird durch einen Anschlag begrenzt. Die Schließkraft S ist dabei die gedachte resultierende Kraft, die sich aus der Summe der Auftriebskräfte an dem Auftriebskörper 4 ergibt. Lediglich symbolisch ist dazu innerhalb einer Hüllkurve 8 ein für Tragflügel übliches Kraftfeld dargestellt, mit einer Vielzahl Einzel-Kraftvektoren. Die tatsächlichen Werte der Kraftvektoren sind nicht ermittelt worden. Es ist aber nicht auszuschließen, daß der tatsächliche Kraftverlauf anders ist, nicht aber die resultierende Schließkraft S, die in erster Linie von Interesse ist. Im Gegensinne zu der Schließkraft S wirkt nun das Gewicht G des Gegengewichtes 5. Bei konstanter Luftgeschwindigkeit bildet sich ein Gleichgewicht zwischen zwei an der Drehachse 15 angreifenden Drehmomenten, nämlich dem von den Luftkräften S hervorgerufenen resultierenden Schließ-Drehmoment und dem vom Gewicht G des Gegengewichtes 5 hervorgerufenen ÖffnungsDrehmoment. Das Gewicht G kann auch im Auftriebskörper 4 vorhanden sein.

Steigt nun die Luftgeschwindigkeit V von einem Wert V₁ auf den doppelten Wert V₂ gemäß Fig. 2, so werden sofort die Auftriebskräfte S von S₁ auf S₂ vergrößert. Dies hat eine Schließung auf etwa die halbe Öffnung zur Folge (Winkel β). Die Luftgeschwindigkeit V vergrößert sich in dem verbleibenden Querschnitt aber doch. Die Summe aller Drehmomente ergibt aber wieder ein neues Gleichgewicht, so daß der Druckunterschied "Pstat₁vor" zu "Pstat₂vor" sofort insofern ausgeglichen wird, als nun die Druckdifferenz durch die neue mehr geschlossene Lage des Auftriebskörpers im Effekt eine nahezu gleiche Luftgeschwindigkeit V₁ = V₂ einstellt. Auf diese Weise regelt die Reguliereinheit tatsächlich in etwa auf eine konstante Luftgeschwindigkeit.

Die entsprechenden Änderungen werden in einem Bruchteil einer Sekunde vorgenommen, so daß für das Luftsystem nahezu keine Störung als Folge der Druckänderung in einer einzelnen Förderleitung 1 festgestellt wird. Dies ist ganz besonders wichtig auch für das Anlaufen von Ventilatoren.

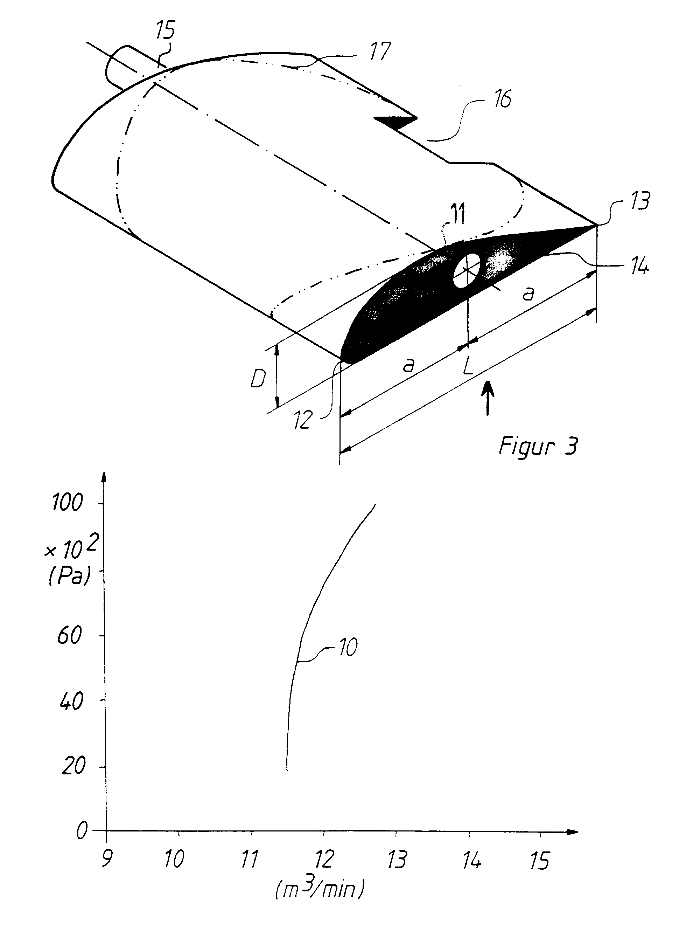

In der Figur 3 unten ist schematisch der Verlauf einer die Wirkung des Auftriebskörpers 4 beschriebenen Meßkurve 10 aufgetragen, nämlich das Verhältnis Druckverlauf Pₐ zu der Luftströmung m³/min. In der oberen Bildhälfte ist der Auftriebskörper 4 dargestellt. Charakteristisch ist dabei, daß die Anströmfläche 12 stark gerundet, die Abströmkante 13 hingegen spitz ausgeformt ist. Die Rundung der Anströmkante ergibt eine beachtliche Dicke D des Profiles, die etwa ein Fünftel der Länge L des Profiles sein kann. Die Unterseite 14 des Auftriebkörpers 4, d. h. dessen der ankommenden Luftströmung zugewandte Fläche, kann leicht nach innen gerundet oder aber auch flach ausgebildet sein. Die ihr gegenüberliegende Fläche 11 des Auftriebkörpers 4 ist nach außen gerundet. Die beschriebene Formgebung hat den Vorteil, daß Staub oder mehlige Partikel an der Oberfläche weniger leicht anhaften.

Das beschriebene Tragflügelprofil (Fig. 3) weist einen Drehpunkt bzw. eine Drehachse 15 auf, die bezüglich der Tiefe (L) des Profiles etwa in der Mitte liegt (a, a). Als weitere besondere Eigenheit hat der Auftriebskörper 4 gemäß Fig. 3 in dem spitz zulaufenden Abströmende 13 einen Einschnitt 16, der für die Luftkräfte ein Ungleichgewicht zugunsten der Schließkräfte S in offener Stellung hat. Dies ermöglicht, ein schwereres Gegengewicht 5 anzubringen, welches die Öffnungskräfte verstärkt. Dies hat zur Folge, daß die Auftriebskörper 4 bei Bedarf aus einer völlig offenen Lage sofort in Richtung Schließung und aus einer ganz geschlossenen Stellung sofort in Richtung Öffnen anspricht. Mit einer strichpunktierten Linie 17 soll angedeutet werden, daß der Auftriebskörper 4 jeder beliebigen Rohr- bzw. Kanalform, rund, oval, rechteckig usw., anpassbar ist.

Es ist aber in besonderen Anwendungen, z. B. ganz besonders großen Querschnitten, möglich, zwei oder mehrere Auftriebskörper parallel nebeneinander zu verwenden. Die Genauigkeit des Resultates wird dabei erhöht, wenn zwischen jedem Auftriebskörper ein Führungsblech angeordnet wird, damit jeder eine eigene Kanalströmung ausbilden kann.

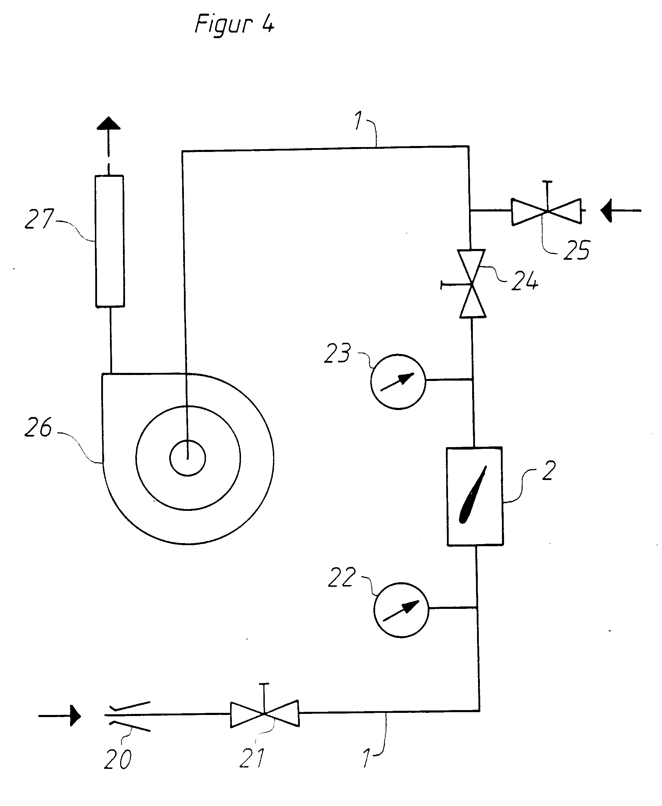

In der Figur 4 ist eine praktische Anwendung der neuen Luftregulierung dargestellt, welche in der Figur noch als Testanlage vervollkommnet ist. Die einströmende Luftmenge wird über ein Venturi-Rohr 20 gemessen. Der Förderdruck kann über eine gewöhnliche Drossel 21 auf beliebige, gewünschte Werte eingestellt werden. Der statische Druck wird vor der Luftreguliereinheit 2 durch ein Manometer 22 festgestellt. Ein weiteres Manometer 23 mißt den statischen Druck nach der Luftreguliereinheit 2. Anschließend ist nochmals eine normal einstellbare Drossel 24. Zur Simulierung verschiedener Luftdruckverhältnisse ist zwischen einem Ventilator 26 und der einstellbaren Drossel 24 ein Lufteinlaßschieber 25 angeordnet. Nach dem Ventilator 26 ist ein Schalldämpfer 27 vorgesehen. In einer entsprechenden Versuchsanordnung konnte die Betriebssicherheit sowie auch die Wirksamkeit bei allen möglichen Betriebszuständen und Betriebsänderungen unter Beweis gestellt werden.

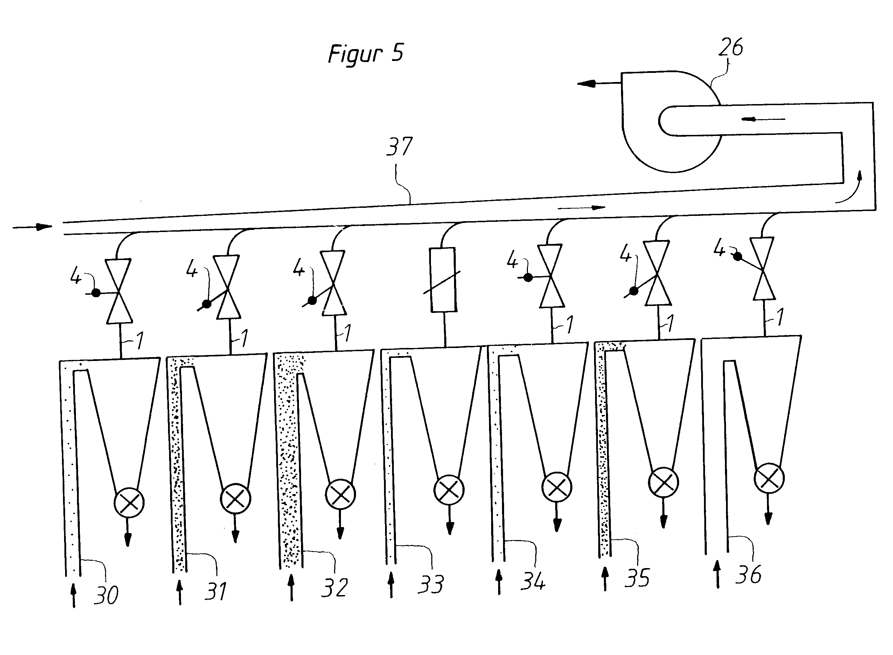

In der Fig. 5 ist die Regulierung der Luftmenge für eine Mühlenpneumatik dargestellt. Die Leitungen 30 bis 36 sind pneumatische Produktförderrohre mit verschiedenen Querschnitten, wie dies in der Praxis üblich ist.

Mehr oder weniger punktiert soll andeuten, daß in der betreffenden Förderleitung im Moment viel, wenig oder kein Produkt gefördert wird. Würde zum Beispiel in den beiden größten Förderleitungen 32 und 36 kein Produkt gefördert, und die Luftmenge in den einzelnen Förderstränge wäre nicht geregelt, so würde sich in diesen beiden Leitungen die Luftgeschwindigkeit extrem erhöhen, dies zu Lasten der kleinquerschnittigen Förderleitungen 30, 31, 33, 34, 35, und die Förderung könnte darin mangels genügender Luftgeschwindigkeit zusammenbrechen.

Mit der erfindungsgemäßen Regelung schließt sich nun aber bei momentan ausbleibender Produktförderung, z. B. in der Förderleitung 36, die Luftreguliereinheit bis zu einem Minimalwert, welcher der Soll-Luftmenge entspricht. Entsprechend den Figuren 1 und 2 ist bei allen Förderleitungen durch entsprechende Schräglage der Gegengewichte die zugehörige Stellung des Auftriebkörpers symbolisch dargestellt.

Im Ergebnis stabilisiert sich auf diese Weise das ganze System, sodaß in der Sammelleitung 37 sich eine etwa konstante Luftmenge einstellt, ganz unabhängig in welcher Förderleitung wieviel Produkt gefördert wird. Aus der Figur 5 ist ferner ersichtlich, daß z. B. für die kleine Förderleitung 33 keine Luftreguliereinheit vorgesehen ist. Sowohl von einem ökonomischen Standpunkt, wie von der Betriebssicherheit her ist dies ohne weiteres zulässig, wenn die entsprechende Luftmenge nur vielleicht 10 bis 20 % der gesamten Luftmenge ausmacht. Es kann sich dabei auch um einen Produktstrang handeln, in dem erfahrungsgemäß Produkte gefördert werden, die sehr stark haftend sind, etwa ganz feuchte Mehle. Hier riskiert man eine kleine Einbuße der Wirtschaftlichkeit, durch Nichtregeln der Luftmenge bzw. durch die Wahl einer in jedem Fall zu großen Luftmenge, dafür fällt eine Störmöglichkeit weg.

## Patentansprüche

1. Luftreguliereinheit (2) zur selbsttätigen Luftströmungsregelung in einem einen Ventilator (26) oder ein Gebläse sowie eine oder mehrere Förderleitungen (30-36) aufweisenden pneumatischen Fördersystem, die einen bewegbar gelagerten Drosselkörper aufweist, an dem eine in Richtung seiner offenen Position wirksame Gegenkraft (G) selbsttätig angreift, dadurch gekennzeichnet,
daß der Drosselkörper als drehbeweglich gelagerter Auftriebskörper (4) nach Art eines Tragflügelprofiles insbesondere mit einer stark gerundeten Anströmseite (12) und einem spitz zulaufenden Abströmende (13) ausgebildet ist, derart, daß die an ihm angreifenden Auftriebskräfte (S) in Richtung seiner Schließposition wirken.

2. Luftreguliereinheit nach Anspruch 1, dadurch gekennzeichnet,
daß der Auftriebskörper (4) auf der der ankommenden Luftströmung zugewandten Seite (14) im wesentlichen flach und auf der gegenüberliegenden Seite (11) gewölbt ausgebildet ist.

3. Luftreguliereinheit nach Anspruch 1 oder 2, dadurch gekennzeichnet,
daß die Gegenkraft (G) durch eine einstellbare Federkraft, ein einstellbares Gegengewicht (5) oder ein Gewicht im Auftriebskörper (4) gebildet ist.

4. Luftreguliereinheit nach einem der vorstehenden Ansprüche, dadurch gekennzeichnet,
daß der Auftriebskörper (4) in der geschlossenen Stellung auf der An- und Abströmseite einen Luftspalt freiläßt.

5. Luftreguliereinheit nach einem der vorstehenden Ansprüche, dadurch gekennzeichnet,
daß der Auftriebskörper (4) auf der Abströmseite (13) einen Einschnitt (16) aufweist.

6. Verfahren zur zur selbsttätigen Regelung der Luftströmung in einer Gruppe von pneumatischen Fördersträngen (30-36), die über ein Verbindungsrohr (37) an einem gemeinsamen Ventilator (26) bzw. einem Gebläse (26) angeschlossen wird, dadurch gekennzeichnet, daß Förderstränge unterschiedlich großer Leitungsquerschnitte verwendet werden,
wobei zumindest bei den Fördersträngen (30, 31, 32, 33, 34, 35, 36) mit größeren Leitungsquerschnitten zur Luftströmungsregelung eine Luftreguliereinheit nach einem der Ansprüche 1-5 verwendet wird, deren Drosselkörper durch das Wechselspiel zwischen im Sinne einer Schließkraft an ihm angreifenden dynamischen Strömungskräften (Auftriebskräfte S) und einer im Sinne einer Öffnungskraft angreifenden Gegenkraft (G), betätigt wird.

7. Verfahren nach Anspruch 6, dadurch gekennzeichnet, daß der Auftriebskörper (4) innerhalb eines Regelbereiches von wenigstens etwa 10°, vorzugsweise von wenigstens etwa 20° als offene Stellung und etwa 90° als geschlossene Stellung geregelt wird.

8. Verwendung einer Luftreguliereinheit nach einem der Ansprüche 1 - 5 für die Regelung der Luftströmung in einem pneumatischen Fördersystem bzw. einem Luftentstaubungssystem.

9. Verwendung nach Anspruch 9, gekennzeichnet
durch die Anordnung des Auftriebskörpers (4) in Form eines Tragflügelprofils im Bereich einer verengten Stelle der Luftleitung (1).

## Claims

1. Air control unit (2) for automatic air flow control in a pneumatic conveying system having a fan (26) or a blower and also one or more conveying conduits (30-36), said unit having a movably mounted throttling element which is acted upon automatically by an opposing force (G) effective in the direction of the open position of the said element, characterised in that the throttling element is constructed as a pivotably mounted uplift element (4) in the manner of an aerofoil profile more particularly with a considerably rounded on-flow side (12) and a tapered off-flow end (13), in such a manner that the lift forces (S) acting on it are effective in the direction of its closing position.

2. Air control unit according to claim 1, characterised in that the uplift element (4) is given a substantially flat shape at the side (14) directed towards the arriving air flow and a curved shape at the opposite side (11).

3. Air control unit according to claim 1 or 2, characterised in that the opposing force (G) is formed by an adjustable spring force, an adjustable counterweight (5), or a weight situated in the uplift element (4).

4. Air control unit according to one of the preceding claims, characterised in that the uplift element (4) leaves an air gap free at the on-flow and off-flow sides in the closed position.

5. Air control unit according to one of the preceding claims, characterised in that the uplift element (4) has a recess (16) at the off-flow side (13).

6. Method for the automatic control of air flow in a group of pneumatic conveying lines (30-36), this being connected via a connecting pipe 67) to a common fan (26) or a blower (26), characterised in that conveying lines with conduit cross-sections of different sizes are used, and at least in the case of the conveying lines (30, 31, 32, 33, 34, 35, 36) with relatively large conduit cross-sections there is used for air flow control an air control unit according to one of claims 1-5, whose throttling element is operated by the interplay between on the one hand dynamic flow forces (lift forces S) acting on it in the sense of a closing force and on the other hand an opposing force (G) acting in the sense of an opening force.

7. Method according to claim 6, characterised in that the uplift element (4) is regulated within a control range comprising at least approximately 10°, preferably approximately 20° at least, as the open position and approximately 90° as the closed position.

8. Use of an air control unit according to one of claims 1 - 5 for the control of air flow in a pneumatic conveying system or an air dedusting system.

9. Use according to claim 9, characterised by arranging the uplift element (4) in the form of an aerofoil profile in the region of a constriction of the air conduit (1).

## Revendications

1. Unité de régulation d'air (2) permettant un régulation automatique du débit d'air dans une installation de transport pneumatique qui comprend un ventilateur (26), ou une soufflante, et une ou plusieurs tuyauteries de transport (30-36) et qui comporte un corps d'étranglement, monté mobile, sur lequel s'exerce automatiquement une force antagoniste (G) agissant sur lui en direction de sa position ouverte, caractérisée en ce que le corps d'étranglement est réalisé sous la forme d'un corps de sustentation (4) monté mobile en rotation et se présentant à la façon d'un profil d'aile portante, comportant notamment un bord d'attaque (12) fortement arrondi et un bord de fuite (13) effilé, de façon telle que les forces de sustentation (S) s'exerçant sur lui agissent dans le sens de sa position de fermeture.

2. Unité de régulation d'air suivant la revendication 1, caractérisée en ce que le corps de sustentation (4) est pratiquement plat sur sa face (14) tournée vers le flux d'air arrivant et est bombé sur sa face opposée (11).

3. Unité de régulation d'air suivant la revendication 1 ou 2, caractérisée en ce que la force antagoniste (G) est fournie par une force élastique réglable, un contrepoids réglable (5) ou un poids disposé dans le corps de sustentation (4).

4. Unité de régulation d'air suivant l'une des revendications précédentes, caractérisée en ce que, dans sa position fermée, le corps de sustentation (4) laisse subsister un passage sur son bord d'attaque et sur son bord de fuite.

5. Unité de régulation d'air suivant l'une des revendications précédentes, caractérisée en ce que le corps de sustentation (4) comporte une découpe (16) sur son bord de fuite (13).

6. Procédé permettant la régulation automatique du débit d'air dans un groupe de tuyauteries de transport pneumatique (30-36) qui sont raccordées à un ventilateur (26), ou une soufflante (26), commun par une tuyauterie de liaison (37), caractérisé en ce que des tuyauteries de transport à sections transversales de différentes grandeurs sont utilisées et en ce qu'au moins dans les tuyauteries de transport (30, 31, 32, 33, 34, 35, 36) de plus grandes sections transversales, il est utilisé, pour la régulation du débit d'air, une unité de régulation d'air, suivant l'une des revendications 1 à 5, dont le corps d'étranglement est mû sous l'effet du rapport mutuel existant entre des forces dynamiques d'écoulement (forces de sustentation S), s'exerçant sur ce corps d'étranglement dans le sens d'une force de fermeture, et une force antagoniste (G) agissant dans le sens d'une force d'ouverture.

7. Procédé suivant la revendication 6, caractérisé en ce que le corps de sustentation (4) est réglé à l'intérieur d'un domaine de régulation compris entre au moins 10° environ, de préférence au moins 20° environ, en position ouverte, et 90° environ en position fermée.

8. Application d'une unité de régulation d'air suivant l'une des revendications 1 à 5, à la régulation du flux d'air dans un circuit de transport pneumatique ou dans un circuit de dépoussiérage d'air.

9. Application suivant la revendication 8, caractérisée par l'agencement du corps de sustentation (4) sous la forme d'un profil d'aile portante dans la zone d'un emplacement rétréci de la tuyauterie d'air (1).
